# EUROPEAN PATENT APPLICATION

(11) **EP 4 786 086 A1**
(43) Date of publication of application: **05.08.2026**
(21) Application number: 25867242.7
(22) Date of filing: 04.06.2025
(51) Int. Cl.: B23K 20/10, H01M 50/528, H01M 10/04

(54) **ULTRASONIC WELDING HORN FOR SECONDARY BATTERY AND ULTRASONIC WELDING APPARATUS FOR SECONDARY BATTERY COMPRISING SAME**

(30) Priority: 11.12.2024 KR 20240183242
(71) Applicant: LG Energy Solution, Ltd., Seoul 07335 (KR)
(72) Inventor: PARK, Seonghwan, Daejeon 34122 (KR); LEE, Jejun, Daejeon 34122 (KR)
(74) Representative: Goddar, Heinz J.
(86) International application number: PCT/KR2025/007657
(87) International publication number: WO 2026/127234

(57) **Abstract**

The present invention provides an ultrasonic welding horn for a secondary battery used in an ultrasonic welding apparatus for a secondary battery. The ultrasonic welding horn: is vertically arranged with a predetermined length, includes an upper end connected to an ultrasonic vibration unit of the ultrasonic welding apparatus, is configured to perform welding by applying ultrasonic waves while being inserted into a can of a secondary battery and pressing against an object to be welded, and includes a ring-shaped ring structure detachably coupled to an outer periphery of a lower end.

## Description

### [Technical Field]

The present invention relates to an ultrasonic welding horn for a secondary battery, and an ultrasonic welding apparatus for a secondary battery including the horn.

### [Background Art]

Secondary batteries, unlike primary batteries, are rechargeable and have been actively researched and developed recently due to their potential for miniaturization and large capacity.

With the increasing technology development and demand for mobile devices, the demand for secondary batteries as an energy source is rapidly increasing.

Secondary batteries are classified into coin-type batteries, cylindrical batteries, prismatic batteries, and pouch-type batteries, depending on the shape of the battery case.

In a secondary battery, an electrode assembly mounted inside a battery case is a chargeable and dischargeable power generating element having a stacked structure of electrodes and a separator.

The electrode assembly can be broadly classified into a jellyroll type in which a separator is interposed between sheet-like positive and negative electrodes coated with active materials, and the positive and negative electrodes and the separator are wound, a stack type in which unit cells, in each of which at least one electrode and at least one separator are stacked, are sequentially stacked, and a stack/folding type in which unit cells are wound with a long separator film.

In secondary batteries of the related art, a negative tab or positive tab of a cylindrical secondary battery are mainly welded using resistance welding.

Cylindrical secondary batteries have various sizes and typically have small diameters, such as 18 mm, 21 mm, and 46 mm. Considering the state of the electrodes inside the can, the region to be welded is a narrow and elongated area with a diameter of several millimeters or less. Therefore, welding must be performed without interference or damage, and thus there are many constraints in welding.

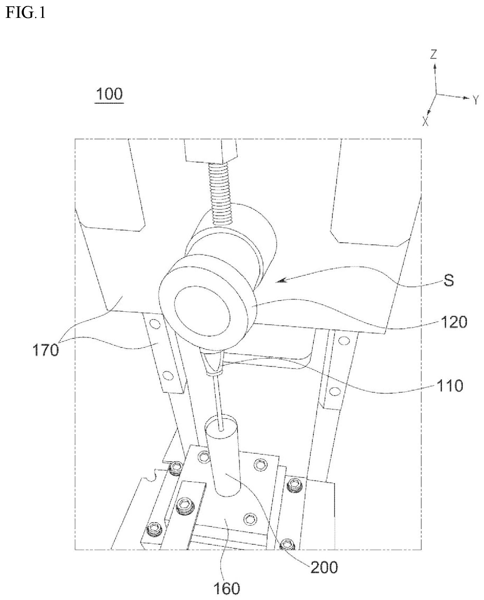

FIG. 1 is a diagram showing an ultrasonic welding apparatus for a secondary battery according to the related art.

An ultrasonic welding apparatus 100 for a secondary battery according to the related art is an ultrasonic welding apparatus 100 for a secondary battery that ultrasonically welds an electrode tab of an electrode assembly accommodated inside a can 200 and a bottom surface of the can 200 or a current collector plate joined to the bottom surface of the can 200.

The ultrasonic welding apparatus 100 for a secondary battery includes a horn 110 that applies ultrasonic vibration to an electrode tab, and an ultrasonic vibration unit S that vibrates the horn 110.

The ultrasonic vibration unit S includes a torsional vibration unit 120 that causes the horn 110 to torsionally vibrate.

In addition, the ultrasonic welding apparatus 100 for a secondary battery further includes a support frame 170 and a fixing jig 160.

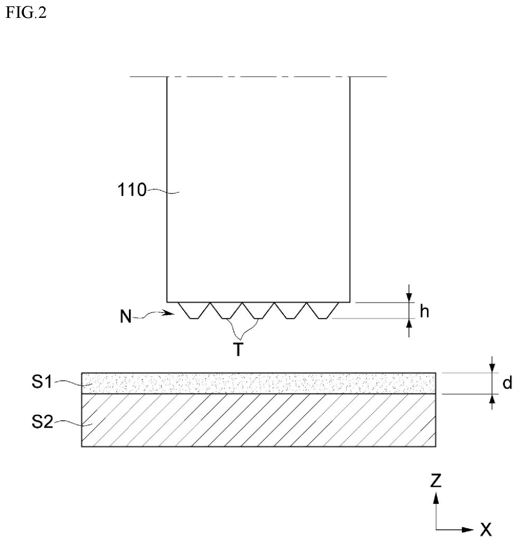

FIG. 2 is a diagram showing a horn of an ultrasonic welding apparatus for a secondary battery according to the related art and an object to be welded.

The horn 110 creates an uneven shape on a first member S1.

Reference sign d denotes the thickness of the first member S1.

The horn 110 presses against the first member S1 with a predetermined load while being in contact with the first member S1, and simultaneously applies ultrasonic waves to ultrasonically weld the first member S1 and a second member S2.

That is, the horn 110 presses against the first member S1 to ultrasonically weld the first member S1 and the second member S2.

The horn 110 includes a knurling portion N having a plurality of protrusions T configured to protrude toward the first member S1.

Reference sign h, which has not been described above, denotes the height of the protrusions T.

The plurality of protrusions T press against the first member S1 with a predetermined load while being in contact with the first member S1, and simultaneously apply ultrasonic waves to ultrasonically weld the first member S1 and the second member S2.

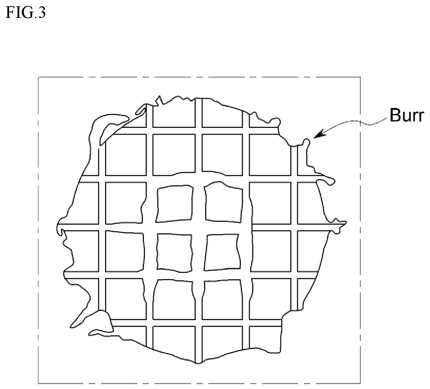

FIG. 3 is a diagram showing a state in which burrs are generated on an object to be welded by a horn of an ultrasonic welding apparatus for a secondary battery according to the related art.

During ultrasonic welding, the horn, which serves as an energy transfer medium, is brought into contact with an object to be welded. During the welding process, the horn vibrates at approximately 20,000 Hz, and digs into the object to be welded, thereby inevitably generating burrs.

Since the burrs, when formed in a sharp shape, can damage the separator and cause an internal short circuit, it is necessary to minimize the occurrence of burrs during the welding process.

### [Citation List]

(Patent Document 1) KR 10-2024-0101240 A
(Patent Document 2) KR 10-2024-0101500 A

### [Disclosure]

### [Technical Problem]

The present invention has been made to solve the above-mentioned problems of the related art, and an object thereof is to provide an ultrasonic welding horn for a secondary battery capable of suppressing burr growth during ultrasonic welding and ensuring a uniform and clean welding surface, and an ultrasonic welding apparatus for a secondary battery including the horn.

### [Technical Solution]

In order to achieve the above object, the present invention provides an ultrasonic welding horn for a secondary battery used in an ultrasonic welding apparatus for a secondary battery, wherein the ultrasonic welding horn: is vertically arranged with a predetermined length, includes an upper end connected to an ultrasonic vibration unit of the ultrasonic welding apparatus, is configured to perform welding by applying ultrasonic waves while being inserted into a can of a secondary battery and pressing against an object to be welded, and includes a ring-shaped ring structure detachably coupled to an outer periphery of a lower end.

The object to be welded may be an electrode tab of an electrode assembly accommodated inside the can and a bottom surface of the can or a current collector plate joined to the bottom surface of the can.

The ultrasonic welding horn may have a cylindrical shape, and an upper portion thereof may be formed to have a larger diameter than a diameter of a lower portion thereof.

A bottom surface of the lower end of the ultrasonic welding horn may include a knurling portion having a plurality of protrusions formed to protrude toward the object to be welded in order to create an uneven shape on the object to be welded.

The protrusions may each be formed to have a width that becomes narrower toward a direction facing the object to be welded.

The protrusions may each have a longitudinal cross section in a trapezoidal shape along a length direction of the ultrasonic welding horn.

A first rounded portion may be formed at an outermost edge portion of the knurling portion.

When the ring structure is coupled to the ultrasonic welding horn, a lower end of the ring structure may be positioned below lower ends of the protrusions formed on the bottom surface of the ultrasonic welding horn, with respect to a length direction of the ultrasonic welding horn, such that the protrusions may be accommodated inside the ring structure.

A second rounded portion may be formed at the lower end of the ring structure.

Note that the present invention discloses an ultrasonic welding apparatus for a secondary battery including an ultrasonic welding horn for a secondary battery.

### [Advantageous Effects]

According to the technical solution, the present invention provides the following effects.

According to the present invention, the ring-shaped ring structure is coupled to the outer periphery of the lower end of the ultrasonic welding horn, the first rounded portion is formed at the outermost edge portion of the knurling portion, and the second rounded portion is formed at the lower end of the ring structure. Accordingly, plastic deformation due to pressure applied to an object to be welded during ultrasonic welding can be reduced, thereby suppressing burr growth and ensuring a uniform and clean welding surface.

As a result, it is possible to enhance internal performance of the secondary battery and ensure stable secondary battery performance by suppressing burr growth and preventing foreign matter.

In addition, the present invention allows the ring structure to be detachably coupled to an ultrasonic welding horn of the related art as needed, eliminating the need to manufacture a separate ultrasonic welding horn and thereby significantly reducing manufacturing costs.

### [Description of Drawings]

FIG. 1 is a diagram showing an ultrasonic welding apparatus for a secondary battery according to the related art.
FIG. 2 is a diagram showing a horn of an ultrasonic welding apparatus for a secondary battery according to the related art and an object to be welded.
FIG. 3 is a diagram showing a state in which burrs are generated on an object to be welded by a horn of an ultrasonic welding apparatus for a secondary battery according to the related art.
FIG. 4 is a diagram showing an ultrasonic welding horn for a secondary battery according to an exemplary embodiment of the present invention.
FIG. 5 is an enlarged view of part A of FIG. 4.
FIG. 6 is a diagram showing a state in which a ring structure in FIG. 5 has been removed.
FIG. 7 is a diagram showing a ring structure used in an ultrasonic welding horn for a secondary battery according to an exemplary embodiment of the present invention.

### [Best Mode]

The advantages and features of the present invention, and a method for achieving the same will become apparent with reference to exemplary embodiments described in detail below together with the accompanying drawings. However, the present invention is not limited to the exemplary embodiments disclosed below, but can be implemented in a variety of different forms. The exemplary embodiments are provided to only complete the disclosure of the present invention and to allow one skilled in the art to which the present invention belongs to completely understand the category of the present invention. The present invention is only defined by the category of the claims. Thus, in some exemplary embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. In contrast, when an element is referred to as being "directly on" another element, there are no intervening elements present. In addition, when an element such as a layer, a film, a region, a plate, or the like is referred to as being "below" another element, it may be "directly below" another element or an intervening element may also be present. Conversely, when an element is referred to as being "directly below" another element, there are no intervening elements present.

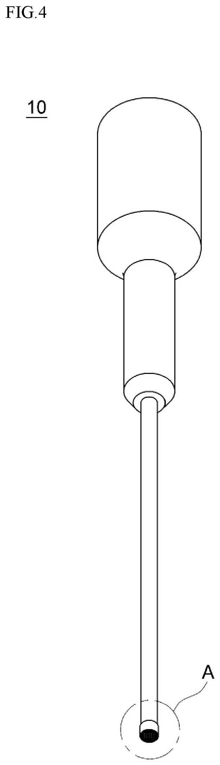

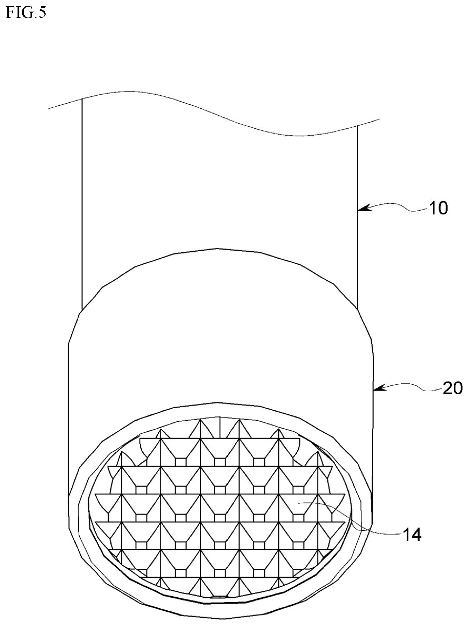

FIG. 4 is a diagram showing an ultrasonic welding horn for a secondary battery according to an exemplary embodiment of the present invention, and FIG. 5 is an enlarged view of part A of FIG. 4.

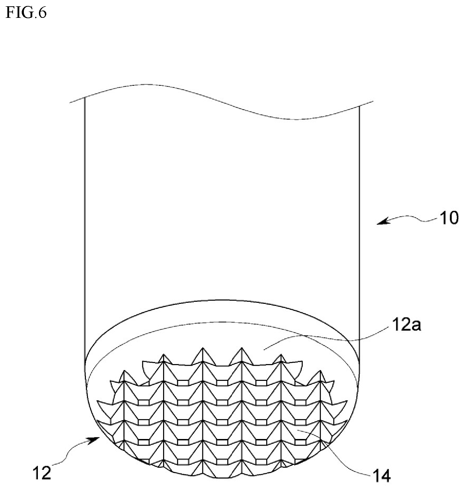

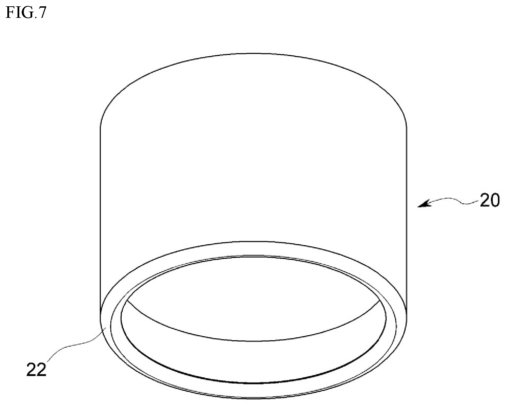

FIG. 6 is a diagram showing a state in which a ring structure in FIG. 5 has been removed, and FIG. 7 is a diagram showing a ring structure used in an ultrasonic welding horn for a secondary battery according to an exemplary embodiment of the present invention.

An ultrasonic welding horn 10 for a secondary battery according to an exemplary embodiment of the present invention is vertically arranged with a predetermined length, includes an upper end connected to an ultrasonic vibration unit of an ultrasonic welding apparatus, and performs welding by applying ultrasonic waves while being inserted into a can of a secondary battery and pressing against an object to be welded.

The ultrasonic welding horn 10 has a cylindrical shape, and an upper portion thereof may be formed to have a larger diameter than a diameter of a lower portion thereof.

The ultrasonic welding horn 10 may perform ultrasonic welding by simultaneously applying ultrasonic waves while the lower portion of the ultrasonic welding horn 10 is inserted into the can of the secondary battery and a lower end of the ultrasonic welding horn 10 presses against an object to be welded, for example, a contact portion of an electrode tab of an electrode assembly accommodated inside the can and a bottom surface of the can or a current collector plate joined to the bottom surface of the can.

A bottom surface of the lower end of the ultrasonic welding horn 10 may include a knurling portion 12 having a plurality of protrusions 14 formed to protrude toward the object to be welded in order to create an uneven shape on the object to be welded.

The plurality of protrusions 14 may press against the object to be welded with a predetermined load while being in contact with the object to be welded, and ultrasonically weld the object to be welded by simultaneously causing the ultrasonic welding horn 10 to apply ultrasonic waves.

The plurality of protrusions 14 may be regularly formed at regular intervals on the bottom surface of the lower end of the ultrasonic welding horn 10, or may also be irregularly formed as needed.

Preferably, the protrusions 14 are each formed to have a width that becomes narrower toward a direction facing the object to be welded. This is to minimize a contact area with the object to be welded, thereby preventing generation of burrs and foreign matter on the object to be welded.

For example, the protrusions 14 may each have a longitudinal cross section in a trapezoidal shape along a length direction of the ultrasonic welding horn 10.

Note that, since ultrasonic welding horns are generally manufactured through profile processing using a diamond wheel that rotates and reciprocates, the outermost edge portion of the knurling portion is inevitably left unfinished.

When ultrasonic welding is performed by the ultrasonic welding horn 10, the object to be welded undergoes plastic deformation at a region corresponding to the outermost edge portion of the knurling portion 12 due to the applied pressure.

Accordingly, burrs or foreign matter such as metal particles may be generated.

If the object to be welded corresponds to a component inside a secondary battery, burrs or foreign matter may remain inside the secondary battery, and such residues are potential risk factors, such as short-circuit occurrence, and become a major cause that significantly affects the performance of the secondary battery.

The ultrasonic welding horn 10 according to an exemplary embodiment of the present invention has a first rounded portion 12a formed at an outermost edge portion of the knurling portion 12.

This can reduce plastic deformation due to the pressure applied to the object to be welded during ultrasonic welding, thereby suppressing burr growth.

A ring-shaped ring structure 20 may be detachably coupled to an outer periphery of the lower end of the ultrasonic welding horn 10 according to an exemplary embodiment of the present invention .

For example, screw threads corresponding to each other may be respectively formed on the outer periphery (outer circumferential surface) of the lower end of the ultrasonic welding horn 10 and an inner circumferential surface of the ring structure 20, so that screw coupling can be achieved.

As another example, the inner circumferential surface of the ring structure 20 may be forcibly fitted so that it comes into contact with the outer periphery (outer circumferential surface) of the lower end of the ultrasonic welding horn 10.

In addition to this, any configuration can be adopted as long as it allows the ring-shaped ring structure 20 to be detachably coupled to the outer periphery of the lower end of the ultrasonic welding horn 10.

When the ring structure 20 is coupled to the ultrasonic welding horn 10, a lower end of the ring structure 20 may be positioned below lower ends of the protrusions 14 formed on the bottom surface of the ultrasonic welding horn 10, with respect to a length direction of the ultrasonic welding horn 10, such that the protrusions 14 may be accommodated inside the ring structure.

A second rounded portion 22 may be formed at the lower end of the ring structure 20.

When welding is performed by coupling the ring structure 20 to the ultrasonic welding horn 10 in this way, the stress on the second rounded portion 22 in contact with the object to be welded can be minimized, and plastic deformation due to the pressure applied to the object to be welded can be reduced, thereby minimizing the generation of burrs and foreign matter.

As such, according to the present invention, the ring-shaped ring structure 20 is coupled to the outer periphery of the lower end of the ultrasonic welding horn 10, the first rounded portion 12a is formed at the outermost edge portion of the knurling portion 12, and the second rounded portion 22 is formed at the lower end of the ring structure 20. Accordingly, plastic deformation due to pressure applied to the object to be welded during ultrasonic welding can be reduced, thereby suppressing burr growth and ensuring a uniform and clean welding surface.

As a result, it is possible to enhance internal performance of the secondary battery and ensure stable secondary battery performance by suppressing burr growth and preventing foreign matter.

Furthermore, the present invention allows the ring structure 20 to be detachably coupled to the ultrasonic welding horn 10 of the related art. Accordingly, the ring structure 20 may be coupled with the ultrasonic welding horn 10 and used, or the ring structure 20 may be separated and used, depending on the frictional force required for ultrasonic welding.

For example, when a large frictional force is required, ultrasonic welding may be performed with the ring structure 20 separated, and when a small frictional force is required, ultrasonic welding may be performed with the ring structure 20 coupled.

Note that an ultrasonic welding apparatus for a secondary battery according to the present invention may include the ultrasonic welding horn 10 for a secondary battery and the ultrasonic vibrating unit (see FIG. 1, S) described above.

The ultrasonic vibration unit (see FIG. 1, S) may be a linear vibration unit that causes the ultrasonic welding horn 10 to vibrate in a horizontal direction, may be a torsional vibration unit (see FIG. 1, 120) that causes the ultrasonic welding horn 10 to torsionally vibrate, or may be configured to include both the linear vibration unit and the torsional vibration unit in combination.

The ultrasonic vibration unit is not a technical feature of the present invention, but is a well-known and commonly used technology, so a detailed description thereof is omitted.

### [Description of Main Reference Numerals of Drawings]

10: ultrasonic welding horn
12: knurling portion
12a: first rounded portion
14: protrusion
20: ring structure
22: second rounded portion

## Claims

1. An ultrasonic welding horn for a secondary battery used in an ultrasonic welding apparatus for a secondary battery, wherein
the ultrasonic welding horn:
is vertically arranged with a predetermined length,
comprises an upper end connected to an ultrasonic vibration unit of the ultrasonic welding apparatus,
is configured to perform welding by applying ultrasonic waves while being inserted into a can of a secondary battery and pressing against an object to be welded, and
comprises a ring-shaped ring structure detachably coupled to an outer periphery of a lower end.

2. The ultrasonic welding horn of claim 1, wherein the object to be welded is an electrode tab of an electrode assembly accommodated inside the can and a bottom surface of the can or a current collector plate joined to the bottom surface of the can.

3. The ultrasonic welding horn of claim 1, wherein the ultrasonic welding horn has a cylindrical shape, and an upper portion thereof is formed to have a larger diameter than a diameter of a lower portion thereof.

4. The ultrasonic welding horn of claim 3, wherein a bottom surface of the lower end of the ultrasonic welding horn comprises a knurling portion having a plurality of protrusions formed to protrude toward the object to be welded in order to create an uneven shape on the object to be welded.

5. The ultrasonic welding horn of claim 4, wherein the protrusions are each formed to have a width that becomes narrower toward a direction facing the object to be welded.

6. The ultrasonic welding horn of claim 5, wherein the protrusions each have a longitudinal cross section in a trapezoidal shape along a length direction of the ultrasonic welding horn.

7. The ultrasonic welding horn of claim 4, wherein a first rounded portion is formed at an outermost edge portion of the knurling portion.

8. The ultrasonic welding horn of claim 4, wherein when the ring structure is coupled to the ultrasonic welding horn, a lower end of the ring structure is positioned below lower ends of the protrusions formed on the bottom surface of the ultrasonic welding horn, with respect to a length direction of the ultrasonic welding horn, such that the protrusions are accommodated inside the ring structure.

9. The ultrasonic welding horn of claim 8, wherein a second rounded portion is formed at the lower end of the ring structure.

10. An ultrasonic welding apparatus for a secondary battery, comprising the ultrasonic welding horn for a secondary battery of any one of claims 1 to 9.
